# EUROPÄISCHE PATENTANMELDUNG

(11) **EP 2 671 907 A1**
(43) Veröffentlichungstag der Anmeldung: **11.12.2013**
(21) Anmeldenummer: 12170968.7
(22) Anmeldetag: 06.06.2012
(51) Int. Cl.: C08J 7/04, F16L 57/04

(54) **Flammgeschütztes Kunststoff-Rohrleitungssystem**

(71) Anmelder: Georg Fischer Rohrleitungssysteme AG, 8201 Schaffhausen (CH)
(72) Erfinder: Hein, Oliver, 8246 Langwiesen (CH)
(74) Vertreter: De Colle, Piergiacomo

(57) **Zusammenfassung**

Verfahren zur Herstellung eines flammgeschützten Kunststoff-Rohrleitungssystems enthaltend Rohrleitungskomponenten insbesondere Rohrleitungen und Anschlusselementen wie Fittings, Ventile, Verschraubungen, Behälter, Pumpen, auf welches auf der äusseren Oberfläche des Kunststoff-Rohrleitungssystems eine intumeszierende Beschichtung auf Wasser- oder Lösungsmittelbasis, die ein vernetzendes Bindemittel insbesondere mindestens eines der Bindemittel, Vinylacetat, Epoxidharz, Acrylat, Acrylat-Mischharz, Polyurethan, Polyurethan-Acrylat und diverse Füllstoffe enthält, aufgetragen wird, wobei eine Schutzschicht über die intumeszierende Beschichtung aufgetragen wird.

## Beschreibung

Die Erfindung betrifft ein Verfahren zur Herstellung eines flammgeschützten Kunststoff-Rohrleitungssystems enthaltend Rohrleitungskomponenten insbesondere Rohrleitungen und Anschlusselementen wie Fittings, Ventile, Verschraubungen, Behälter, Pumpen usw., auf welches auf der äusseren Oberfläche des Kunststoff-Rohrleitungssystems eine intumeszierende Beschichtung auf Wasser- oder Lösungsmittelbasis, die ein vernetzendes Bindemittel insbesondere mindestens eines der Bindemittel, Vinylacetat, Epoxidharz, Acrylat, Acrylat-Mischharz, Polyurethan, Polyurethan-Acrylat und diverse Füllstoffe enthält, aufgetragen wird sowie das flammgeschützte Kunststoff-Rohrleitungssystem.

In Bereichen in denen ein erhöhter Brandschutz gefordert ist, das heisst, dass die eingesetzten Materialien nicht nur nicht zur Erhöhung der Brandlast beitragen dürfen, sondern über eine vorgeschriebene Zeit einem Brand stand halten müssen, werden in der Regel bisher Metall-Rohrleitungssysteme eingesetzt. In Anwendungsbereichen, in denen es von Vorteil ist Rohrleitungssysteme vorzusehen, die ein geringes Gewicht aufweisen oder korrosionsbeständig sind wie bspw. auf Schiffen, kommen Rohrleitungssysteme aus Metall nur sehr ungern zum Einsatz. Alternativen dazu sind Kunststoff-Rohrleitungssysteme, jedoch sind diese nur beschränkt einsetzbar, da herkömmliche Kunststoff-Rohrleitungssysteme sich nicht für den Brandschutzbereich eignen, weil sie keinem Feuer stand halten und sich sofort zersetzen und dadurch die Brandlast zusätzlich erhöhen, zudem sind sie auch für Löschwasserleitungen ungeeignet.

Kunststoffe die flammhemmend sind, sind bereits bekannt. Dazu werden dem Kunststoff Flammschutzadditive wie bspw. bromierte Flammschutzmittel, chlorierte Organo-Phosphate, Metall-Hydroxide, Metalle-Oxide oder Organophosphate zugemischt. Aus diesem mit Additiven versetztem Kunststoff werden Rohrleitungen bzw. Rohrleitungskomponenten hergestellt. Wobei solche Rohrleitungssysteme mit veränderten physikalischen Eigenschaften des Kunststoffs, durch die Zufügung der Flammschutzadditive, sich nicht für alle darin zu fördernden Medien einsetzten lassen. Im Trinkwasserbereich sind solche Compound-Kunststoffe nicht zulässig und deshalb für Trinkwasserrohrleitungssysteme nicht einsetzbar.

Aus dem Stand der Technik sind auch flammgeschützte Kunststoffrohre bekannt, die aus unterschiedlichen Schichten hergestellt sind. Das Material der Innenschicht ist ein herkömmlicher Kunststoff, der den Forderungen der Trinkwasserzulassung entspricht. Die äussere Schicht ist eine feuerfeste Schicht, die einen Flammschutz um die Innenschicht bildet. Sei es durch einen Kunststoff der mit einem Flammschutzadditiven versehen ist und um das Innenrohr co-extrudiert wird oder ein feuerfester Faserüberzug, der die Rohrleitung überzieht wie das die EP 0 660 020 B1 offenbart. Solch mehrlagige Brandschutzverbindungen eigenen sich gut für die Herstellung von Rohrleitungen. Zur Herstellung von Anschlusselementen wie Fittings, Ventile usw. ist diese Art von Flammschutz jedoch nicht anwendbar. Die EP 0 857 272 B1 offenbart ebenso ein feuerfestes Rohr, welches mit einer Verstärkungsfaser umwickelt und einem Harz verklebt wird. Die Herstellung eines solchen Brandschutzes ist sehr kostenintensiv und ist ebenfalls auf Anschlusselemente kaum oder nur sehr schlecht und mit hohem Aufwand umsetzbar.

Die US 2010/0084037 beschreibt ein Verfahren zum Aufbringen einer Beschichtung auf ein flexibles rohrförmiges Bauteil. Die Beschichtungen, die durch dieses Verfahren aufgetragen werden, dienen der Verbesserung der UV-Beständigkeit des flexiblen röhrenförmigen Bauteils sowie als Sauerstoffbarriere. Zudem ist die Beschichtung resistent gegen mechanische Einflüsse wie Zerkratzen und andere abrasive Vorkommnisse. Die durch dieses Verfahren aufgetragenen Beschichtungen, eigenen sich aber nicht als Brand- bzw. Flammschutz.

Es ist Aufgabe der Erfindung ein Verfahren zur Herstellung eines flammgeschützten Kunststoff-Rohrleitungssystems sowie das flammgeschützte Kunststoff-Rohrleitungssystem selbst vorzuschlagen, durch welches eine intumeszierende Beschichtung, welche sich für einen Brandschutz eignet, auf ein Kunststoff-Rohrleitungssystem inkl. Anschlusselemente applizierbar ist und trotz der negativ auf die Beschichtung einwirkenden Umwelteinflüsse wie bspw. Feuchtigkeit, Verschleiss, usw. ihre Funktion des Brandschutzes gewährleistet.

Diese Aufgabe wird erfindungsgemäss dadurch gelöst, dass eine Schutzschicht über die intumeszierende Beschichtung aufgetragen wird.

Wie schon zuvor erwähnt sind intumeszierende Beschichtungen Stand der Technik. Im Bereich des Bauwesens sind aufschäumende Schichten, die eine isolierende Schicht um einen Stahlträger bilden bekannt. Jedoch eine solche Schicht bzw. Beschichtung auf einen Grundkörper aus Kunststoff aufzubringen erfordert ein spezielles Verfahren um die Haftung, die mechanische Beständigkeit, die Flexibilität und den hohen Brandschutz zu gewährleisten. Der Vorteil einer solchen Beschichtung besteht darin, dass sie sowohl auf die Rohrleitungen als auch auf Anschlusselemente applizierbar ist und dadurch das komplette Kunststoff-Rohrleitungssystem flammgeschützt ist. Rohrleitungssysteme enthalten neben den Rohrleitungen auch Anschlusselemente wie Fittings, Ventile, Verschraubungen, Behälter, Pumpen und andere Elemente. Das Rohrleitungssystem besteht vorzugsweise aus mindestens einem der Kunststoffe PVC-C, PVC-U, ABS, PP, PE und/oder PB, wobei die einzelnen Komponenten des Systems nicht aus denselben Kunststoffen hergestellt sein müssen, es jedoch üblich ist, dass ein System aus einem Typ Kunststoff besteht.

Die intumeszierende Beschichtung, die auf das Kunststoff-Rohrleitungssystem aufgetragen wird, ist auf Wasser- oder Lösungsmittelbasis und enthält mindestens ein vernetzendes Bindemittel wie bspw. Vinylacetat, Epoxidharz, Acrylat, Acrylat-Mischharz, Polyurethan, Polyurethan-Acrylat, sowie auch diverse Füllstoffe wie Melamine, Ammoniumpolyphosphate oder Polyalkohole.

Vor dem Aufbringen der Beschichtung ist die äussere Oberfläche des Kunststoff-Rohrleitungssystems zu reinigen. Dazu werden vorzugsweise Lösungsmittel oder Tenside eingesetzt. Alternativ dazu besteht auch die Möglichkeit die Oberfläche mit Partikelstrahlen oder Trockeneisstrahlen zu reinigen.

Als weiteren Verfahrensschritt wird die äussere Oberfläche des Kunststoff-Rohrleitungssystems beflammt. Alternativ zur Beflammung besteht die Möglichkeit der Plasmabehandlung. Bei der Beflammung wird der Kunststoff mit einer offenen Flamme behandelt. Direkt nach der Beflammung oder der Plasmabehandlung erfolgt das Aufbringen der intumeszierenden Schichtung. Zur Verbesserung der Haftung der intumeszierenden Schicht am Kunststoff-Rohrleitungssystem besteht die Möglichkeit vor dem aufbringen der intumeszierenden Schicht des Auftragens eines Haftvermittlers. Ein solcher Haftvermittler kann nach einer Beflammung oder Plasmabehandlung oder an Stelle dieser aufgetragen werden.

Die intumeszierende Beschichtung wird vorzugsweise durch Sprühen aufgetragen, wobei mehrere Schichten nacheinander aufgetragen werden können, wodurch sich die Dicke der Schicht erhöht. Alternativ kann die Schicht auch durch Walzen oder Tauchen aufgebracht werden. Je dicker die Schicht umso höheren Temperaturen kann das Kunststoff-Rohrleitungssystem ausgesetzt werden. Jedoch sollte die Beschichtung eine minimale Dicke bzw. Trockenschichtdicke von 0.3mm aufweisen um eine geeigneten Brandschutz darzustellen.

Zum Schutz vor Umwelteinflüssen wie Feuchtigkeit, Reinigungsmittel usw. wird auf die intumeszierende Beschichtung eine Schutzschicht aufgebracht. Die Schutzschicht ist eine Lackschicht, die auf Wasser oder Lösungsmittel basiert und vorzugsweise durch Sprühen aufgetragen wird. Die Dicke dieser Schicht bzw. Trockenschicht liegt vorzugsweise im Bereich zwischen 0.02-0.15mm.

Nach dem Auftragen der Schicht wird das Kunststoff-Rohrleitungssystem thermisch nachbehandelt.

## Patentansprüche

1. Verfahren zur Herstellung eines flammgeschützten Kunststoff-Rohrleitungssystems enthaltend Rohrleitungskomponenten insbesondere Rohrleitungen und Anschlusselementen wie Fittings, Ventile, Verschraubungen, Behälter, Pumpen, auf welches auf der äusseren Oberfläche des Kunststoff-Rohrleitungssystems eine intumeszierende Beschichtung auf Wasser- oder Lösungsmittelbasis, die ein vernetzendes Bindemittel insbesondere mindestens eines der Bindemittel, Vinylacetat, Epoxidharz, Acrylat, Acrylat-Mischharz, Polyurethan, Polyurethan-Acrylat und diverse Füllstoffe enthält, aufgetragen wird, **dadurch gekennzeichnet, dass** eine Schutzschicht über die intumeszierende Beschichtung aufgetragen wird.

2. Verfahren zur Herstellung eines flammgeschützten Kunststoff-Rohrleitungssystems nach Anspruch 1, **dadurch gekennzeichnet, dass** das Kunststoff-Rohrleitungssystem bzw. die Komponenten aus mindestens einem der Kunststoffe PVC-U, PVC-C, ABS, PP, PE oder PB besteht.

3. Verfahren zur Herstellung eines flammgeschützten Kunststoff-Rohrleitungssystems nach einem der Ansprüche 1 oder 2, **dadurch gekennzeichnet, dass** die Oberfläche des Kunststoff-Rohrleitungssystems gereinigt wird, vorzugsweise durch ein Lösungsmittel, ein Tensid, Partikelstrahlen oder durch Trockeneisstrahlen.

4. Verfahren zur Herstellung eines flammgeschützten Kunststoff-Rohrleitungssystems nach einem der Ansprüche 1 bis 3, **dadurch gekennzeichnet, dass** das Kunststoff-Rohrleitungssystem beflammt wird.

5. Verfahren zur Herstellung eines flammgeschützten Kunststoff-Rohrleitungssystems nach einem der Ansprüche 1 bis 3, **dadurch gekennzeichnet, dass** das Kunststoff-Rohrleitungssystem plasmabehandelt wird.

6. Verfahren zur Herstellung eines flammgeschützten Kunststoff-Rohrleitungssystems nach einem der vorangehenden Ansprüche, **dadurch gekennzeichnet, dass** ein Haftvermittler auf das Kunststoff-Rohrleitungssystem aufgetragen wird.

7. Verfahren zur Herstellung eines flammgeschützten Kunststoff-Rohrleitungssystems nach einem der vorangehenden Ansprüche, **dadurch gekennzeichnet, dass** die intumeszierende Beschichtung durch Sprühen aufgetragen wird.

8. Verfahren zur Herstellung eines flammgeschützten Kunststoff-Rohrleitungssystems nach einem der vorangehenden Ansprüche, **dadurch gekennzeichnet, dass** die intumeszierende Beschichtung durch Walzen aufgetragen wird.

9. Verfahren zur Herstellung eines flammgeschützten Kunststoff-Rohrleitungssystems nach einem der vorangehenden Ansprüche, **dadurch gekennzeichnet, dass** die intumeszierende Beschichtung durch Tauchen aufgetragen wird.

10. Verfahren zur Herstellung eines flammgeschützten Kunststoff-Rohrleitungssystems nach Anspruch 1, **dadurch gekennzeichnet, dass** die Schutzschicht durch eine auf Lösungsmitteln basierende Lackschicht gebildet wird.

11. Verfahren zur Herstellung eines flammgeschützten Kunststoff-Rohrleitungssystems nach Anspruch 1, **dadurch gekennzeichnet, dass** die Schutzschicht durch eine auf Wasser basierende Lackschicht gebildet wird.

12. Verfahren zur Herstellung eines flammgeschützten Kunststoff-Rohrleitungssystems nach einem der vorangehenden Ansprüche, **dadurch gekennzeichnet, dass** das flammgeschützte Kunststoff-Rohrleitungssystem thermisch nachbehandelt wird.

13. Flammgeschützes Kunststoff-Rohrleitungssystem enthaltend Rohrleitungskomponenten insbesondere Rohrleitungen und Anschlusselementen wie Fittings, Ventile, Verschraubungen, Behälter, Pumpen, wobei die äusseren Oberfläche des Kunststoff-Rohrleitungssystem eine intumesziernede Beschichtung auf Wasser- oder Lösungsmittelbasis, die ein vernetzendes Bindemittel insbesondere mindestens eines der Bindemittel:
Vinylacetat, Epoxidharz, Acrylat, Acrylat-Mischharz, Polyurethan-Acrylat und diverse Füllstoffe enthält, aufweist, **dadurch gekennzeichnet, dass** eine Schutzschicht über der intumeszierenden Beschichtung liegt.

14. Flammgeschützes Kunststoff-Rohrleitungssystem nach Anspruch 13 **dadurch gekennzeichnet, dass** die intumeszierende Beschichtung eine minimale Dicke von 0.3mm aufweist, die vorzugsweise durch Sprühen aufgebracht ist.

15. Flammgeschützes Kunststoff-Rohrleitungssystem nach Anspruch 8, **dadurch gekennzeichnet, dass** die Schutzschicht eine Dicke von 0.02 - 0.15 mm aufweist, die vorzugsweise durch Sprühen aufgebracht ist.
